# EUROPÄISCHE PATENTANMELDUNG

(11) **EP 1 332 858 A1**
(43) Veröffentlichungstag der Anmeldung: **06.08.2003**
(21) Anmeldenummer: 03001935.0
(22) Anmeldetag: 30.01.2003
(51) Int. Cl.: B29C 45/14, B29C 45/56, G06K 19/077

(54) **Chipkarte, Verfahren und Vorrichtung zur Herstellung einer Chipkarte**

(30) Priorität: 31.01.2002 DE 10203970
(71) Anmelder: Orga Kartensysteme GmbH, 33104 Paderborn (DE)
(72) Erfinder: Dohse, Stefan, 23623 Ahrensbök (DE); Zander, Jörg, 24113 Molfsee (DE)

(57) **Zusammenfassung**

Die Erfindung betrifft ein Verfahren zur Herstellung einer Chipkarte durch Spritzprägen, wobei zunächst in mindestens eine der in einem Spritzprägewerkzeug (1) vorhandenen Formnesthälften (2, 3) ein Label (4, 5) eingelegt wird und zumindest eine Seite einer Formnesthälfte einen verschiebbaren Formstempel (6) aufweist, der an seiner freien Innenoberfläche (7) ein erstes Label (4) trägt und nach Schließen des Spritzprägewerkzeuges (1) sowie nachfolgendem Einbringen einer verflüssigten Kunststoffschmelze (13) in die unterhalb des Labels (4, 5) gebildete Spritzprägewerkzeugkavität (8) zur Fertigstellung des Chipkartenkörpers in Richtung der gegenüberliegend angeordneten Formnesthälfte (2, 3) bewegt wird.

Die dabei hergestellte Chipkarte (9) besteht vorzugsweise aus zwei eine Kunststoffschicht zwischen sich aufnehmenden Labeln (4, 5) aus bedruckten Folien.

## Beschreibung

Die vorliegende Erfindung betrifft ein Verfahren zur Herstellung einer Chipkarte und befasst sich weiterhin mit einer derartigen Chipkarte sowie einer Vorrichtung zur Anwendung des Verfahrens.

Chipkarten oder auch SIM- bzw. Smartcards sind insbesondere beim bargeldlosen Zahlungsverkehr, zur Zugangskennung abgesicherter Bereiche sowie auch als Kundenkarten verstärkt im Einsatz.

Diese Chipkarten bestehen aus Kunststoff und enthalten Informationsdatenspeicher, die von entsprechenden Lesegeräten erfasst und ausgewertet werden können. Auf Grund des immer komplexer werdenden Aufbaus derartiger Chipkarten wird ihre Herstellung zunehmend schwieriger, weil auch die fertigungstechnischen Anforderungen an ihre Genauigkeit mit zunehmender Komplexität wachsen. Darüber hinaus ist es erforderlich, diese Chipkarten in großen Stückzahlen je Zeiteinheit, also in kurzen Taktzeiten zu produzieren. Dies ist gegenwärtig möglich, in dem die Chipkarten mittels an sich bekannter Spritzgiessverfahren in hierfür geeigneten Spritzgiesswerkzeugen erzeugt werden. Die Taktzeiten zur Herstellung der Chipkarten im Spritzgiessverfahren sind sehr kurz, so dass eine wirtschaftliche Produktion möglich ist. Beim Spritzgiessverfahren kommt ein Spritzgiesswerkzeug mit einer Werkzeugkavität zum Einsatz, in welche ein verflüssigter Kunststoff unter hoher Temperatur und hohem Druck eingespritzt wird. Insbesondere zu Prozessbeginn sind die Innenwandungen des Spritzgiesswerkzeuges relativ kühl, das heißt die Temperaturdifferenz zwischen Innenwandung und eingespritztem Kunststoff ist sehr groß. Dadurch kommt es zu hohen Scherkräften zwischen der Kunststoffschmelze und der Innenwandung. Dies kann dazu führen, dass sich der Kunststoff ungleichmäßig abkühlt und die Chipkarte damit inhomogen wird.

Darüber hinaus ist eine Gefahr darin zu sehen, dass sich bei Einsatz von Folien, wie sie als Label für derartige Chipkarten zum Einsatz kommen, diese Folien durch die Temperaturdifferenz und die hohen Scherkräfte unerwünscht verformen, wobei vielfach eine Faltenbildung der Folien zu verzeichnen ist. Derartige Chipkarten sind unbrauchbar und für die vorgesehenen Einsatzzwecke nicht mehr geeignet.

Schwierigkeiten bereitet das Spritzgießen auch, wenn man einen Chipkartenkörper durch Folienhinterspritzen herstellen möchte. Hierbei werden in die Werkzeugkavität mindestens eine jeweils ein vorderseitiges oder ein rückseitiges Label bildende, bedruckte Folie eingelegt, welche dann mit einer Kunststoffschmelze hinterspritzt werden. Die Gefahr der ungewollten Verformung der Folie wird ungleich größer, je mehr Folien in die Chipkarte integriert werden müssen, da die Scherkräfte zwischen Schmelze und Folie mit der Anzahl und Dicke der eingelegten Label steigen, was insbesondere bei Labeln mit geätzten oder gedruckten Leiterbahnen zur Beschädigung der Leiterbahnen führen kann, so dass sich damit naturgemäß auch die Ausschussquote bislang bekannter Chipkarten erhöht.

Darüber hinaus gehen vermehrt Bestrebungen dahin, die Chipkarte bereits während des Spritzgießens zu komplettieren, das heißt sie mit den entsprechenden Labeln zu versehen und bei der Herstellung bereits entsprechende Informationsträger wie Mikrochipmodule etc. in die Karte zu integrieren.

Ein derartiges Spritzgiessverfahren ist beispielsweise aus der DE 197 36 082 C1 bekannt. In der Schrift wird ein Spritzgiessverfahren beschrieben, dass mittels eines bewegbaren Kernes die Herstellung mehrschichtiger Chipkartenkörper ermöglicht. Durch die Bewegbarkeit des Kernes ist es darüber hinaus möglich, während des Spritzgießens Chipmodule oder Folien auf den Chipkartenkörper aufzubringen oder diese mit dem Chipkartenkörper zu verbinden.

Der Erfindung liegt die technische Aufgabe zu Grunde, ein Verfahren zur Herstellung einer Chipkarte bereitzustellen, welches mit geringem fertigungstechnischen Aufwand die Herstellung von Chipkarten mit gleich bleibender Qualität ermöglicht. Darüber hinaus ist es Ziel der Erfindung, eine Vorrichtung zur Durchführung des Verfahrens zu entwickeln.

Die Erfindung löst diese technische Aufgabenstellung mit den Merkmalen der unabhängigen Patentansprüche. Weitere Ausgestaltungen ergeben sich jeweils aus den sich anschließenden Unteransprüchen.

Ein erfindungsgemäßes Verfahren zur Herstellung einer Chipkarte durch Spritzprägen ist dadurch gekennzeichnet, dass zunächst in mindestens eine der in einem Spritzprägewerkzeug vorhandenen Formnesthälften ein Label eingelegt wird. Zumindest an einer Seite der Formnesthälften ist ein verschiebbarer Formstempel vorhanden. Dieser Formstempel ist durch die Gestaltung seiner freien, der Spritzwerkzeugkavität zugewandten Innenoberfläche geeignet, ein erstes Label aufzunehmen. Vorteilhafterweise werden in beide Formnesthälften Label eingelegt. Nach dem Schließen des Spritzprägewerkzeuges sowie einem anschließenden Einbringen einer verflüssigten Kunststoffschmelze in die zwischen den Labeln gebildete Spritzprägewerkzeugkavität wird der Formstempel zur Fertigstellung des Chipkartenkörpers in Richtung auf das gegenüberliegend angeordnete zweite Label bewegt. Selbstverständlich kann ein Formstempel sowohl einseitig als auch beidseitig wirkend in dem Spritzprägewerkzeug vorgesehen werden. Durch beidseitig wirkende Formstempel können beispielsweise Chipkarten mit mehreren unterschiedlichen Kunststoffschichten erzeugt werden.

Das erfindungsgemäße Spritzprägeverfahren ermöglicht durch das Verschieben des Formstempels innerhalb des Formnestes die Fertigstellung der Chipkarte in einem Arbeitstakt.

Als Label können bedruckte Label sowie mit Antennen, Batterien, Displays usw. versehene Label in Folienform in die jeweiligen Formnesthälften eingesetzt werden. Auf Grund der fertigungstechnischen Vorteile des Spritzprägeverfahrens gegenüber dem bekannten Spritzgießen werden die Label mechanisch weniger beansprucht. Ferner sind geringere Temperatureinflüsse zu verzeichnen, und es treten kleinere Scherkräfte zwischen der Formnestinnenwandung und der Chipkarte auf.

Damit weist eine erfindungsgemäß hergestellte Chipkarte insgesamt eine hohe Fertigungsqualität durch eine hervorragende Homogenität auf. Innerhalb des Chipkartenkörpers sind herstellungsbedingt weniger Eigenspannungen vorhanden, als dies bei herkömmlichen Verfahren der Fall war. Dies lässt sich damit erklären, dass die in die Spritzprägewerkzeugkavität eingebrachte Kunststoffschmelze eine, verglichen mit dem Spritzgiessverfahren, geringere Temperatur aufweist.

Bei geschlossenem Spritzprägewerkzeug weist vor Beginn des eigentlichen Prägevorganges der Chipkarte die Spritzprägewerkzeugkavität ein größeres Volumen auf, als die fertig gestellte Chipkarte. Dies ermöglich die zuvor bereits erwähnte reduzierte thermische Belastung, weil sich die Kunststoffschmelze innerhalb des Spritzprägewerkzeuges geringfügig abkühlen kann.

Durch den in dem Spritzprägewerkzeug verschiebbaren Formstempel wird die in die Spritzprägewerkzeugkavität eingebrachte Kunststoffschmelze unter entsprechendem Druck stark verdichtet. Hierdurch lässt sich die einheitliche, gleich bleibende Qualität und Homogenität erfindungsgemäß hergestellter Chipkarten erreichen.

Insgesamt wurde mit dem erfindungsgemäßen Herstellungsverfahren zur Herstellung einer Chipkarte eine Vereinfachung und Verbesserung der Fertigungsqualität geschaffen.

Auf Grund des Umstandes, dass die verflüssigte Kunststoffschmelze in die Spritzprägewerkzeugkavität eingebracht wird, welche zunächst ein, verglichen mit der fertig gestellten Chipkarte, größeres Volumen aufweist, kann die Kunststoffschmelze auch unter einem im Vergleich zum Spritzgiessverfahren wesentlich geringeren Druck in die Spritzprägewerkzeugkavität eingebracht werden. Dadurch sind bei einem derartigen Fertigungsverfahren auch die Anforderungen an das Werkzeug reduziert. Dieses vereinfacht sich folglich in seinem Aufbau, was jedoch nicht Gegenstand der vorliegenden Erfindung ist, sich jedoch als eine vorteilhafte Wirkung ergibt.

Gemäß einer weiteren Ausgestaltung des erfindungsgemäßen Verfahrens ist es vorgesehen, in die Spritzprägewerkzeugkavität lediglich ein der Chipkarte entsprechendes Kunststoffschmelzvolumen einzubringen. Damit können in vorteilhafter Weise Nachbearbeitungen der Chipkarte sowie die Beseitigung und Entsorgung überschüssigen Kunststoffschmelzmaterials vermieden werden. Das Verfahren zur Herstellung einer Chipkarte wird damit wirtschaftlicher und bietet zudem Kostenvorteile sowie eine geringere Umweltbelastung.

Dem zuvor beschrieben erfindungsgemäßen Verfahren zur Herstellung einer Chipkarte folgend kann eine derartige Chipkarte aus mindestens einem, vorzugsweise zwei, eine Kunststoffschicht zwischen sich aufnehmenden Labeln bestehen. Diese Label sind vorzugsweise aus bedruckten Folien hergestellt. Somit lässt sich ein nachfolgend erforderlich werdendes Bedrucken der einmal auf die Chipkarte aufgebrachten Folien vermeiden. Auch durch diese Maßnahme ist eine Reduzierung der Fertigungstiefe bei der Herstellung einer erfindungsgemäßen Chipkarte möglich. Darüber hinaus ist es vorteilhaft, dass die erfindungsgemäße Chipkarte aus einem dekorierten Chipkartenkörper bestehen kann.

Zur Durchführung des Verfahrens zur Herstellung einer erfindungsgemäßen Chipkarte ist eine Vorrichtung vorgesehen, welche im Wesentlichen ein Spritzprägewerkzeug bestehend aus zwei Formnesthälften ist. Von den beiden Formnesthälften stellt eine Erste eine Schließseite und die Zweite eine Spritzseite dar. Die Schließseite wird auf die Spritzseite zu bewegt und verschließt somit das Spritzprägewerkzeug zur Erzeugung der Chipkarte. Darüber hinaus nimmt eine erfindungsgemäße Vorrichtung zur Anwendung des Verfahrens auf ihrer Schließseite den verschiebbaren Formstempel auf.

Gemäß einer Weiterbildung kann darüber hinaus die Spritzseite des Spritzprägewerkzeuges einen Angiesskanal enthalten, der über einen Anschnitt in die Spritzprägewerkzeugkavität mündet. Unter dem Angiesskanal ist dabei in an sich bekannter Weise die Zuführung der verflüssigten Kunststoffschmelze zu der Spritzprägewerkzeugkavität zu verstehen. Selbstverständlich können innerhalb einer Spritzseite auch mehrere Angiesskanäle vorgesehen werden, wobei der oder die Angiesskanäle auch im Bodenbereich einer Formnesthälfte münden können. Als Anschnitt ist eine vorzugsweise unter einem Winkel, also schräg in die Spritzprägewerkzeugkavität mündende Öffnung des Angiesskanales oder der Angiesskanäle zu verstehen. Durch eine derartige Zuführung kann die Verteilung des flüssigen Kunststoffvolumens besser kontrolliert werden. Allerdings ist eine schräge Zuführung der verflüssigten Kunststoffschmelze nicht zwingend für den Erfolg des erfindungsgemäßen Verfahrens notwendig.

Entsprechend einer weiteren möglichen Ausführung weist die Schließseite des Spritzprägewerkzeuges eine Komplementärform zu dem in dieser beweglich aufgenommenen Formstempel auf. Dies ist notwendig, um eine exakte Führung des Formstempels innerhalb des Spritzprägewerkzeuges zu ermöglichen. So können Verluste und Übertritte flüssiger Kunststoffschmelze vermieden werden, so dass die Chipkarte mit gleich bleibender Qualität und ohne Materialverluste erzeugbar ist.

Zur Sicherung der beiden Formnesthälften des Spritzprägewerkzeuges sind darüber hinaus gemäß einer weiteren Ausgestaltung der erfindungsgemäßen Vorrichtung Führungselemente vorhanden, welche die Formnesthälften gegeneinander fixieren. Ein unerwünschtes Verschieben der Formnesthälften relativ zueinander ist damit wirksam vermeidbar.

Anhand der Figurendarstellung soll nachfolgend beispielhaft das erfindungsgemässe Verfahren zur Herstellung einer Chipkarte beschrieben und gleichzeitig die Vorrichtung zur Anwendung dieses Verfahrens verdeutlicht werden.

Es zeigen:
- Figur 1:: den Blick auf eine Formnesthälfte eines Spritzprägewerkzeuges,
- Figur 2:: den Schnittverlauf II - II gemäß der Darstellung in Figur 1 durch ein geöffnetes Spritzprägewerkzeug,
- Figur 3:: den Schnitt II - II durch ein geschlossenes Spritzprägewerkzeug,
- Figur 4:: den Schnitt II - II durch ein geschlossenes Spritzprägewerkzeug mit eingebrachter Kunststoffschmelze und
- Figuren 5 und 6:: das Prägeverfahren in zwei Stufen im Schnitt durch ein Spritzprägewerkzeug.

In den Figuren ist eine sehr stark vereinfachte schematische Darstellung eines insgesamt mit 1 bezeichneten Spritzprägewerkzeuges in Form eines Stadienplanes zur Veranschaulichung eines erfindungsgemäßen Verfahrens zur Herstellung einer Chipkarte gezeigt.

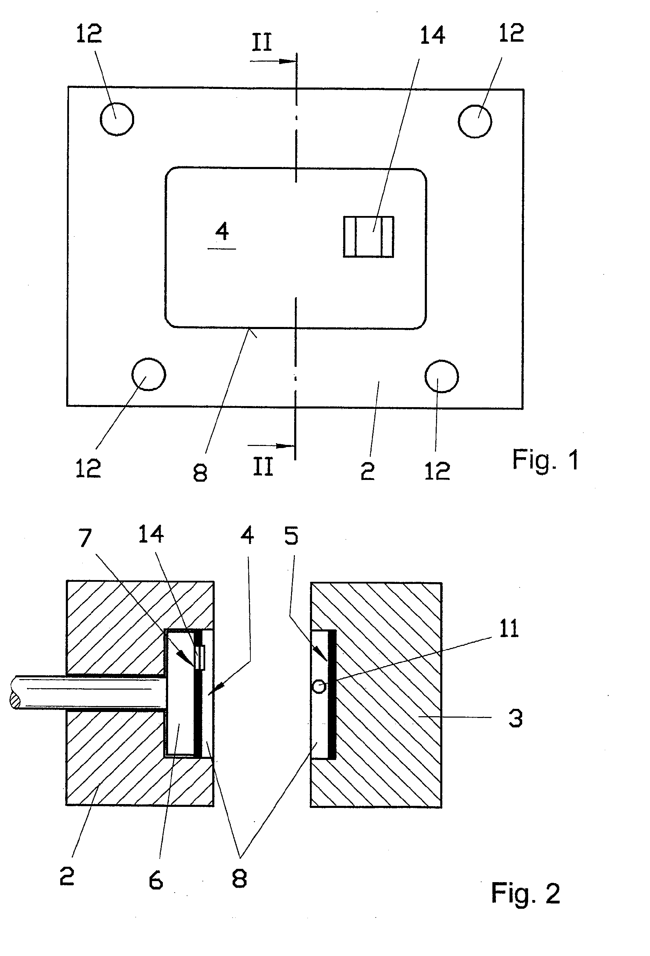

Die Figur 1 stellt die Ansicht auf eine Formnesthälfte 2 des Spritzprägewerkzeuges 1 dar. Diese Schießseite 2 nimmt in einer hierfür vorgesehen Spritzprägewerkzeugkavität 8 ein Label 4 auf, welches aus einer bedruckten Folie besteht. Dieses Label 4 nimmt die gesamte Fläche der Spritzprägewerkzeugkavität 8 ein. Zur Fixierung der geschlossenen Formnesthälften 2 und 3 des Spritzprägewerkzeuges 1 gegeneinander dienen die in der Figur 1 gezeigten Führungselemente 12.

Wie aus der Figur 2 ersichtlich wird, die einen Schnittverlauf II - II gemäß der Darstellung in Figur 1 zeigt, befindet sich hinter dem Label 4 ein Formstempel 6, welcher vorliegend einen kolbenartigen Aufbau aufweist. Die in Richtung der Spritzprägewerkzeugkavität 8 zeigende, freie Innenoberfläche 7 des Formstempels 6 nimmt das zuvor beschriebene Label 4 auf. Dabei weist der Formstempel 6 im Übrigen eine zu der Spritzprägewerkzeugkavität 8 Komplementäre Oberfläche auf. Dies ist erforderlich, um ein störungsfreies Gleiten und damit die Verschiebbarkeit des Formstempels 6 innerhalb der Spritzprägewerkzeugkavität 8 zu gewährleisten.

Gegenüberliegend dem Label 4 ist in dem aus zwei Formnesthälften 2 und 3 bestehenden Spritzprägewerkzeug 1 in der Formnesthälfte 3 innerhalb der Spritzprägewerkzeugkavität 8 ein weiteres Label 5 eingesetzt.

Ferner kann während des Herstellungsverfahrens einer erfindungsgemäßen Chipkarte eine Modulkavität 14 in die Chipkarte eingeprägt werden.

Das in der Figur 2 geöffnet dargestellte Spritzprägewerkzeug 1 bestehend aus den Formnesthälften 2 und 3 wird zur Durchführung des erfindungsgemäßen Verfahrens zur Herstellung einer Chipkarte zunächst geschlossen, nachdem die Label 4 und 5 in die Spritzprägewerkzeugkavität 8 eingesetzt wurden.

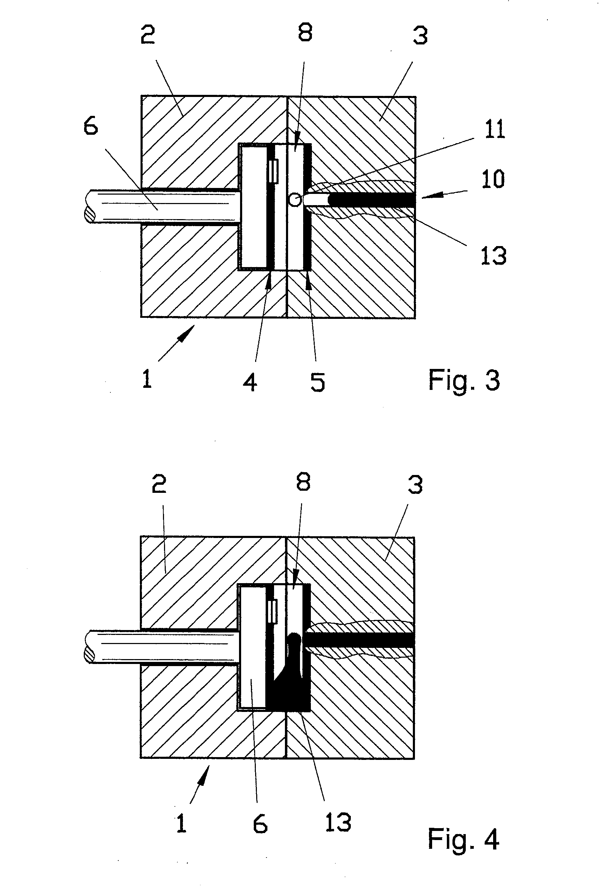

Wie aus der Figur 3 ersichtlich wird, erfolgt anschließend die Einbringung der verflüssigten Kunststoffschmelze 13 in die Spritzprägewerkzeugkavität 8. Hierzu dient ein Angiesskanal 10, der über einen in der Spritzprägewerkzeugkavität 8 vorhandenen Anschnitt 11 das Einbringen der Kunststoffschmelze 13 in die Spritzprägewerkzeugkavität 8 ermöglicht. Dabei wird erfindungsgemäß nur ein Kunststoffschmelzvolumen in die Spritzprägewerkzeugkavität 8 eingebracht, die dem Volumen der später fertig gestellten Chipkarte entspricht, um ein Austreten überflüssigen Volumens über im Werkzeug vorhandene Öffnungen und Spalte zu vermeiden.

Die Figur 4 zeigt anschaulich die bereits eingebrachte Kunststoffschmelze 13 in der Spritzprägewerkzeugkavität 8.

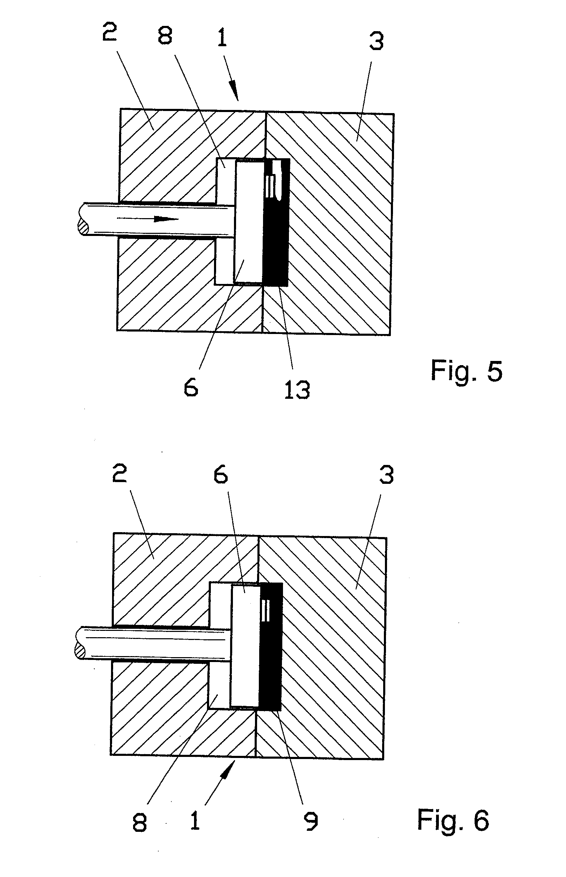

In einem nachfolgenden Verfahrensschritt, wie er in der Figur 5 dargestellt ist, erfolgt nunmehr eine Druckbeaufschlagung des Formstempels 6 in Richtung des Pfeiles A gemäss der Darstellung in Figur 5. Der Formstempel 6 wird demzufolge auf den zweiten Label 5 zubewegt, wobei gleichzeitig eine Verdichtung der in die Spritzprägewerkzeugkavität 8 zuvor eingebrachten verflüssigten Kunststoffschmelze erfolgt.

In der Figur 5 ist im oberen Bereich der später fertig gestellten Chipkarte noch ein Hohlraum zu erkennen, der infolge der Druckwirkung des Formstempels 6, wie in Figur 6 veranschaulicht ist, geschlossen wird.

Die Figur 6 zeigt dementsprechend eine in dem Spritzprägewerkzeug 1 fertig gestellte Chipkarte 9.

Mit dem erfindungsgemäßen Herstellungsverfahren einer Chipkarte lassen sich beliebige Chipkartenkonturen formen und Label frei anordnen sowie unterschiedlichste Gestaltungen der Chipkarten selbst erzeugen, also beispielsweise auch mehrschichtige Chipkarten herstellen. Es kann eine sehr homogene Chipkartenstruktur bereitgestellt werden, die frei von Eigenspannungen und mit geringen Scherkräften belastet sowie mit nur geringer thermischer Beanspruchung während der Fertigung beaufschlagt ist.

### Bezugszeichenliste

- 1.: Spritzprägewerkzeug
- 2.: Formnesthälfte
- 3.: Formnesthälfte
- 4.: Label
- 5.: Label
- 6.: Formstempel
- 7.: Innenoberfläche
- 8.: Spritzprägewerkzeugkavität
- 9.: Chipkarte
- 10.: Angiesskanal
- 11.: Anschnitt
- 12.: Führungselement
- 13.: Kunststoffschmelze
- 14.: Modulkavität

## Patentansprüche

1. Verfahren zur Herstellung einer Chipkarte durch Spritzprägen, wobei zunächst in mindestens eine der in einem Spritzprägewerkzeug (1) vorhandenen Formnesthälften (2, 3) ein Label (4, 5) eingelegt wird und zumindest eine Seite einer Formnesthälfte einen verschiebbaren Formstempel (6) aufweist, der an seiner freien Innenoberfläche (7) das Label (4) trägt und nach Schließen des Spritzprägewerkzeuges (1) sowie nachfolgendem Einbringen einer verflüssigten Kunststoffschmelze (13) in die unterhalb des Labels (4, 5) gebildete Spritzprägewerkzeugkavität (8) zur Fertigstellung des Chipkartenkörpers in Richtung der gegenüberliegend angeordneten Formnesthälfte (2, 3) bewegt wird.

2. Verfahren zur Herstellung einer Chipkarte nach Anspruch 1, **dadurch gekennzeichnet, dass** in jede Formnesthälfte (2, 3) ein Label (4, 5) eingelegt wird.

3. Verfahren zur Herstellung einer Chipkarte nach Anspruch 1 oder 2, **dadurch gekennzeichnet, dass** die Einbringung der verflüssigten Kunststoffschmelze (13) in die Spritzprägewerkzeugkavität (8) unter einem verglichen mit einem Spritzgiessverfahren geringeren Druck erfolgt.

4. Verfahren zur Herstellung einer Chipkarte nach einem der vorstehend genannten Ansprüche, **dadurch gekennzeichnet, dass** in die Spritzprägewerkzeugkavität (8) ein der Chipkarte entsprechendes Kunststoffschmelzvolumen (13) eingebracht wird.

5. Chipkarte hergestellt nach einem Verfahren gemäß Anspruch 2, **dadurch gekennzeichnet, dass** die Chipkarte (9) zwei eine Kunststoffschicht zwischen sich aufnehmende Label (4, 5) aus bedruckten Folien aufweist.

6. Chipkarte nach Anspruch 5, **dadurch gekennzeichnet, dass** mindestens eines der Label (4, 5) mindestens ein elektronisches Bauelement, vorzugsweise eine Spule, eine Antenne, eine Batterie oder dergleichen aufweist.

7. Chipkarte nach Anspruch 5 oder 6, **dadurch gekennzeichnet, dass** die Chipkarte aus einem dekorierten Chipkartenkörper besteht.

8. Vorrichtung zur Anwendung eines Verfahrens nach Anspruch 1, **dadurch gekennzeichnet, dass** das Spritzprägewerkzeug (1) zwei Formnesthälften (2, 3) aufweist, von denen die Erste eine Schließseite (2) und die Zweite eine Spritzseite (3) bildet.

9. Vorrichtung zur Anwendung eines Verfahrens nach Anspruch 1, **dadurch gekennzeichnet, dass** die Spritzseite (3) einen Angiesskanal (10) aufweist, der über einen Anschnitt (11) in die Spritzprägewerkzeugkavität (8) mündet.

10. Vorrichtung nach Anspruch 9, **dadurch gekennzeichnet, dass** der Angiesskanal (10) in der Bodenfläche einer Formnesthälfte (2, 3) mündet.

11. Vorrichtung nach Vorrichtung nach Anspruch 9 oder 10, **dadurch gekennzeichnet, dass** die Schließseite (2) eine Komplementärform zu dem in dieser beweglich aufgenommenen Formstempel (6) bildet.

12. Vorrichtung nach einem der Ansprüche 9 bis 11, **dadurch gekennzeichnet, dass** die Formnesthälften (2, 3) über Führungselemente (12) miteinander verbunden sind.
